# EUROPÄISCHE PATENTSCHRIFT

(11) **EP 0 381 817 B1**
(45) Veröffentlichungstag und Bekanntmachung des Hinweises auf die Patenterteilung: **09.06.1993**
(21) Anmeldenummer: 89118865.8
(22) Anmeldetag: 11.10.1989
(51) Int. Cl.: F16D 65/52

(54) **Vorrichtung für eine Trommelbremse, insbesondere für mechanisch betätigbare, selbstverstärkende Innenbackentrommelbremsen für Kraftfahrzeuge**
Device for a drum brake, in particular for mechanically operated self energising internal drum brakes for motor vehicles
Dispositif pour un frein à tambour, notamment pour freins à auto-serrage à mâchoires intérieures et à commande mécanique pour véhicules à moteur

(30) Priorität: 12.01.1989 DE 3900740
(43) Veröffentlichungstag der Anmeldung: 16.08.1990
(73) Patentinhaber: ALFRED TEVES GmbH, 60441 Frankfurt (DE)
(72) Erfinder: Weiler, Rolf, D-6239 Eppstein 2 (DE); Panek, Claus-Peter, D-6374 Steinbach (DE); Endler, Wolfgang, D-6238 Hofheim (DE); Hendrich, Uwe, D-6500 Mainz 42 (DE)
(74) Vertreter: Portwich, Peter

(56) Entgegenhaltungen:
- DE-A- 2 357 377
- DE-B- 1 151 191
- DE-C- 539 375
- FR-A- 980 482
- FR-A- 1 109 463
- GB-A- 776 849
- GB-A- 2 116 656
- US-A- 2 476 237

## Beschreibung

Die Erfindung betrifft eine Vorrichtung für eine Trommelbremse, insbesondere für mechanisch betätigbare, selbstverstärkende Innenbackentrommelbremsen für Kraftfahrzeuge, mit einem Paar an einem Druckstück einer Bremsträgerplatte angeordneten und mit Zugfedern versehenen Bremsbacken, mit einer mechanischen Betätigungsvorrichtung, die zwischen einem Paar einander gegenüberliegenden, durch eine Feder vorgespannten Bremsbackenenden wirksam ist, wobei die mechanische Betätigungsvorrichtung die Bremsbacken zum Bremsen an eine sie umschließende Bremstrommel anzupressen vermag und wobei die Trommelbremse an mindestens einem die Bremsbacken stützenden Bremsbackensteg eine zwischen dem Bremsbackenende angeordnete, spielausgleichende Nachstelleinrichtung vorsieht.

Eine Trommelbremse mit den vorstehenden Merkmalen ist aus dem ATE Bremsenhandbuch, Bartsch Verlag, 8. Auflage, Seite 135 bereits bekannt. Bei dieser Trommelbremse ist eine als Spreizschloß ausgeführte, mechanische Betätigungsvorrichtung zwischen einem ersten Paar einander gegenüberliegenden durch Federn vorgespannten Bremsbackenenden auf einer Bremsträgerplatte angeordnet, wobei ein zweites Paar der Bremsbackenenden an eine Nachstellvorrichtung, bestehend aus einer Nachstellmutter und einer Nachstellschraube ein Druckstück berührt.

Diese Nachstellvorrichtung hat den Nachteil, daß zusätzliche manuelle Einstell- und Prüfarbeit, sowohl während der Montage, wie auch im Betrieb zur Beibehaltung der optimalen Funktionstüchtigkeit erforderlich sind, da infolge von Fertigungstoleranzen der Bauteile und insbesondere im Betrieb entstehender Belagverschleiß das Lüftspiel der Bremsbacken unzulässig vergrößert, sowie die wirksame mechanische Hebel-Übersetzung des Spreizschlosses nachteilig beeinflußt.

Aus der DE-B-1 151 191 ist eine Trommelbremse mit selbsttätig wirkenden Nachstellvorrichtungen bekannt. Dabei ist eine erste und eine zweite Nachstellvorrichtung vorgesehen, die jeweils eine der beiden Bremsbacken in ihrer Ruhestellung festlegt, wobei zwischen den sich abnutzenden Reibbelägen und der Bremstrommel ein gleichbleibendes Lüftspiel gewährleistet ist. Eine dritte Nachstellvorrichtung ist zum Ausgleich des sich verlängernden Betätigungsweges einer mechanischen Betätigungsvorrichtung vorgesehen. Diese bekannte Trommelbremse ist, insbesondere was die Nachstellvorrichtungen betrifft, kompliziert aufgebaut und besteht aus relativ vielen Einzelteilen. Außerdem ist die offenbarte Anordnung der Nachstellvorrichtungen nicht auf eine Duz-Servo-Trommelbremse übertragbar, bei der an beiden Bremsbacken Selbstverstärkung auftritt. Dabei ist es nämlich erforderlich, daß die Bremsbacken an ihren der Spreizvorrichtung gegenüberliegenden freien Enden gegeneinander und bezüglich der Bremse schwimmend abgestützt sind.

Aus der FR-A-980.482 ist eine Trommelbremse mit zwei selbsttätig wirkenden Nachstellvorrichtungen bekannt, durch die jeweils eine der Bremsbacken in ihrer Ruhestellung festgelegt ist. Die beiden Nachstellvorrichtungen sind auf einfache Weise als längenveränderliche Druckstreben ausgebildet, die aber beide an einem ortsfesten Bolzen abgestützt sind. Eine weitere Nachstellvorrichtung für eine mechanische Betätigungsvorrichtung der Trommelbremse ist hier nicht vorgesehen.

Der vorliegenden Erfindung liegt daher die Aufgabe zugrunde, eine Trommelbremse der eingangs genannten Gattung zu schaffen, bei der eine gleichbleibende Funktionssicherheit gewährleistet ist, unabhängig von fertigungs-, einstell- und einsatzbedingten nachteiligen Material- und Konstruktionserscheinungen.

Die Aufgabe wird erfindungsgemäß durch die den Patentanspruch 1 kennzeichnenden Merkmale gelöst.

Damit ist eine Nachstelleinrichtung in eine Trommelbremse integriert, die sich durch herstellungsunabhängige, gleichbleibende Funktionszuverlässigkeit mittels selbsttätig wirkender Nachstellvorrichtungen auszeichnet.

Eine vorteilhafte Ausgestaltung des Erfindungsgegenstandes sieht vor, daß das Nachstellglied der zweiten Nachstellvorrichtung anstelle eines zugfederbelasteten Drehkeiles einen drehfederbelasteten Exzenter aufweist, dessen berührende, dem Nachstelldruckstück vorgelagerte Stirnfläche vorzugsweise schräg verzahnt ist und mit einer gleichartig verzahnten Berandung des plattenförmigen Nachstelldruckstückes zusammenwirkt, wodurch über den federbelasteten Kraftschluß hinaus eine vorteilhafte, formschlüssig unterstützte Flächenpaarung an den Kontaktflächen zustandekommt.

Weiterhin sieht die Erfindung vor, als Nachstellglied ein keilförmig gestaltetes Klemmelement mit einem in einem Langloch geführten Bolzen unter Einwirkung einer Nachstellungszugfeder und Klemmstückzugfeder am Nachstelldruckstück angreifen zu lassen, so daß durch die Relativbewegung des Nachstelldruckstückes zum keilförmigen Klemmstück eine stufenlose Einstellung des Nachstelldruckstückes erfolgt.

Eine empfehlenswerte Weiterbildung des Erfindungsgegenstandes sieht vor, einen exzentrisch drehbaren, am Bremsbackensteg gelagerten Hebel mit einem drehbar am Bremsbackensteg gelagerten Drehsegment zusammenwirken zu lassen, so daß beide drehbare Teile unter Krafteinwirkung einer Drehfeder miteinander an einem ersten Abschnitt abstützend zusammenwirken, wobei sich das Drehsegment an einem zweiten, geometrisch ausgeformten Abschnitt am Abstützbock anlegt.

Die Erfindung läßt vielfältige Ausführungsformen zu. Weitere Ausführungsformen sind in den folgenden Zeichnungen dargestellt und werden nachfolgend näher beschrieben.

Es zeigen:
- Fig.1: eine Gesamtansicht der erfindungsgemäßen Trommelbremse,
- Fig.2: die erfindungsgemäße erste Nachstellvorrichtung in vergrößertem Maßstab 2:1 in drei verschiedenen Ansichten,
- Fig. 3: die erfindungsgemäße zweite Nachstellvorrichtung in Anordnung am Spreizschloß und Abstützbock,
- Fig. 4: die Abschnittsweise im Querschnitt dargestellte zweite Nachstellvorrichtung aus Fig. 3,
- Fig. 5: eine vorteilhafte Ausführungsform der zweiten Nachstellvorrichtung als Exzenter-Nachstellung,
- Fig. 6: eine weitere Ausführungsform der zweiten Nachstellvorrichtung in der Draufsicht auf die erfindungsgemäße Trommelbremse,
- Fig. 7: ein günstiges Ausführungsbeispiel der zweiten Nachstellvorrichtung als Kombination von Drehsegment, Hülse und Gewindebolzen,
- Fig. 8: die zweite Nachstellvorrichtung in Kombination von Drehsegment und Klemmhebel,
- Fig. 9: die erfindungsgemäße, im Druckstück integrierte Einstelleinheit, dargestellt im Längsschnitt.

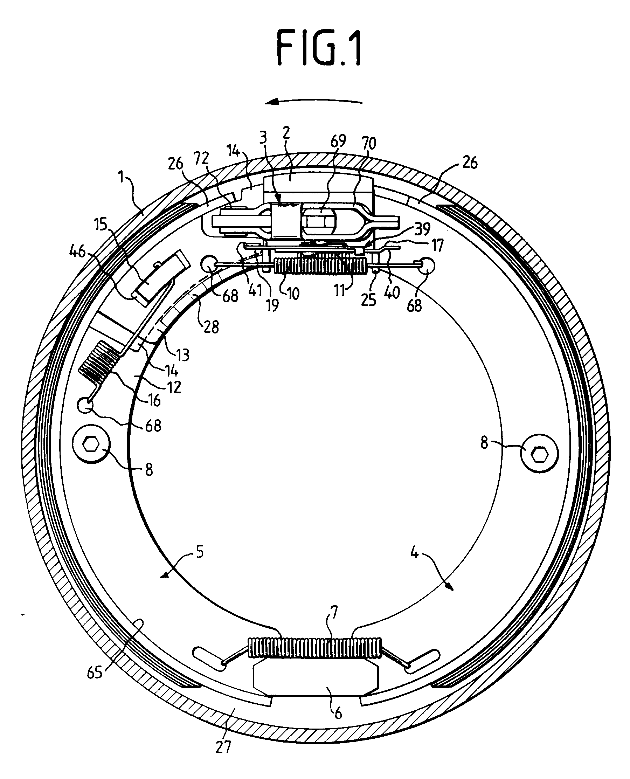

In der Fig. 1 ist in der Gesamtansicht eine mechanisch betätigbare, selbstverstärkende Innenbackentrommelbremse abgebildet mit einem Paar auf einer Bremsträgerplatte 27 an einem Drückstück 6 angeordneten und mit einer Zugfeder 7 versehenen Bremsbacken 4, 5, einer als Spreizschloß 3 ausgeführten, mechanischen Betätigungsvorrichtung, die zwischen einem Paar einander gegenüberliegenden, durch Bremsbackenzugfeder 10 vorgespannten Bremsbackenenden wirksam ist, wobei das aus einem Betätigungshebel 69, einer Drucklasche 70, einem Zugseil und einem Gelenkbolzen 72 zusammengesetzte Spreizschloß 3 die Bremsbacken 4, 5 an die sie umschließende, im Schnitt dargestellte Bremstrommel 1 zu pressen vermag, nachdem das minimale Lüftspiel durch eine erste, parallel zum Spreizschloß 3 angeordnete Nachstellvorrichtung mit zwischen den Bremsbacken 4, 5 eingespannter, mehrteiliger, längenveränderlicher Druckstrebe 39 überbrückt ist und unter Wirkung einer zweiten Nachstellvorrichtung an einem dem Bremsbacken 5 stützenden Bremsbackensteg 12 und einen Drehkeil 15 aufweisenden, über ein in Umfangsrichtung verschiebbares Nachstelldruckstück 14 den Abstützbock 2 berührt. Das Nachstelldruckstück 14 und die Bremsbackenstege 12, 13 weisen zum Trommelbremsenmittelpunkt tangential verlaufende Öffnungen 45, 46, 47 auf, in die der Drehkeil 15 eingesetzt ist. Dabei wird der Drehkeil 15 radial vom Nachstelldruckstück 14 geführt und von einer Nachstellzugfeder 16 um seinen Drehpunkt gegen das Nachstelldruckstück 14 geschwenkt. Die Bremsbacken 4, 5 werden in die Richtung auf das Druckstück 6 und auf das Spreizschloß 3 von den Zugfedern 7, 10 gehalten, wobei die als zweiteiliges Stanzteil ausgebildete Druckstrebe 39 in Ausschnitte 40, 41 am Stegsegment 13 und dem Bremsbackensteg 12 eingreift und durch eine den Führungsfahnen 25 vorgelagerte Bremsbackenzugfeder 10 gegen Verlust gesichert ist. Der Bremsbacken 5 nimmt auf seinen Bremsbackensteg 12 die zweite Nachstellvorrichtung, bestehend aus Drehkeil 15, Nachstelldruckstück 14 und Nachstellzugfeder 16 auf. Zwischen dem Bremsbackensteg 12 und Stegsegment 13 ist das Druckstück 14 in Umfangsrichtung gegen den Stützbock 2 und das Spreizschloß 3 verschiebbar eingefügt, wobei die radiale Führung des Druckstückes 14 durch die Belagträgerblechinnenseite 65 und die Einformung 28 an der Berandung des Bremsbackensteges 12 gewährleistet ist. Die Bremsbackenhalterungen 8 sorgen für eine parallele Ausrichtung der Bremsbacken 4, 5 zur Bremsträgerplatte 27.

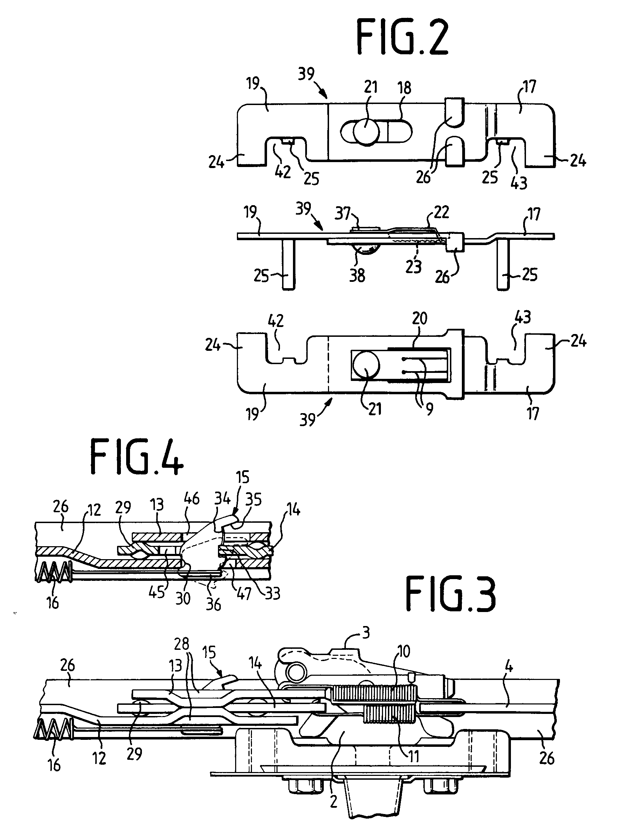

Fig. 2 zeigt die erfindungsgemäße erste Nachstellvorrichtung in vergrößertem Maßstab in drei verschiedenen Blickrichtungen, wonach die Druckstrebe 39 aus zwei vorzugsweise als Stanzteile ausgeführten Platten 17, 19 mit an einer ersten Platte 19 seitlich angeordneten, die zweite Platte 17 in Längsrichtung umgreifenden Führungselemente 26 besteht. Die aus einem Blechteil gestanzte Platte 17 ist in Längsrichtung mit einem Langloch 18 versehen, das den an der Platte 19 angebrachten Schaft eines Nietstiftes führt, so daß durch Setzkopf 37 und Schließkopf 38 des Nietstiftes beide Platten 17, 19 längenveränderbar eingeklemmt sind. Durch den Nietstift wird eine Blattfeder 22 gehalten, deren abgekröpftes Ende durch einen in Verschieberichtung der Platte 19 ausgestanzten Ausschnitt 20 in eine auf der Platte 17 vorgesehenen Querverzahnung 23 eingreift. In Auseinanderziehrichtung der Platte 17, 19 haben die einzelnen Zähne der Querverzahnung 23 und der Blattfeder 22 annähernd die gleiche Winkellage, wodurch die Verzahnung leichtgängig übereinanderrutscht, jedoch tritt in Zusammendrückrichtung der Platte 17, 19 eine Sperrwirkung ein, so daß die Druckstrebe 39 immer eine die Bremsbacken 4, 5 aufspreizende Nachstellwirkung gewährleistet und somit keine selbsttätige Rückstellung ermöglicht. Zur Abstützung bzw. Lagerung der Druckstrebe 39 an den Bremsbacken 4, 5 sind beide Platten 17, 19 an ihren Enden als hakenförmige Stege 24 ausgebildet, die in Ausschnitte 40, 41 an die Bremsbackenstegfläche eingreifen. Durch die hakenförmig geformten Stege 24 an den Enden der Druckstrebe 39 ergeben sich Verjüngungen, in denen rechtwinklige, abgekröpfte Führungsfahnen 25 an den Platten 17, 19 zur Abstützung der Druckstrebe 39 an den Bremsbacken 4, 5 verbleiben.

Die Druckstrebe 39 wirkt als Bestandteil der ersten Nachstellvorrichtung ausschließlich als Spreiznachstellung, da infolge der ausziehbar gestalteten Platten 17, 19 die Bremsbacken 4, 5 bei Belagverschleiß aufgespreizt werden, um nahezu gleiches Lüftspiel und damit gleichbleibende Funktionsbedingungen der Trommelbremse zu gewährleisten.

Fig. 3 veranschaulicht den Aufbau der zweiten Nachstellvorrichtung der erfindungsgemäßen Trommelbremse in einer Darstellung als Abwicklung und Teilschnitt aus Fig. 1, wonach parallel zur Bremsbackenzugfeder 10 eine Nachstellungszugfeder 11 in eine Öffnung am Ende des plattenförmigen Nachstelldruckstückes 14 eingehängt ist, die unter Wirkung einer Zugkraft das Nachstelldruckstück 14 am in der Fig. 3 teilweise gezeigten Abstützbock 2 zur Auflage bringt. Der Bremsbackensteg 12 und das Stegsegment 13 sind vorzugsweise durch Punktschweißungen an ihren Einformungen 28 der Flächenberandungen beider Teile miteinander verbunden, wobei das zwischengelagerte Nachstelldruckstück 14 und der Drehkeil 15 in nicht näher in Fig. 3 gezeigten Öffnungen 45, 46, 47 verschiebbar bzw. verschwenkbar angeordnet ist.

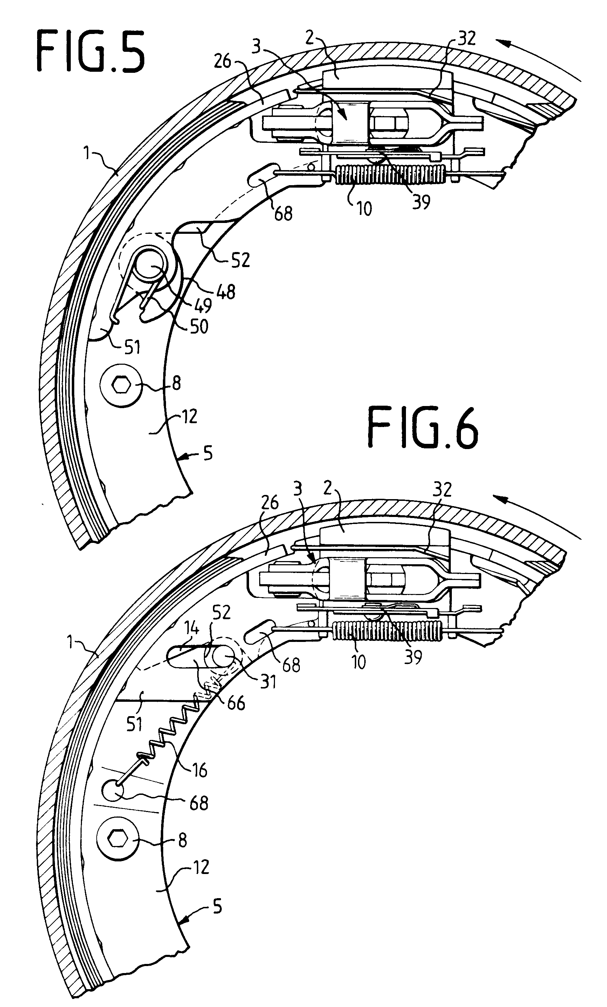

Fig. 4 zeigt das parallel verschiebbare Nachstelldruckstück 14 zwischen dem im Schnitt dargestellten, angrenzenden Bremsbackensteg 12 und dem Stegsegment 13 und den schwenkbar in der Öffnung 46 des Bremsbackensteges 12 abgestützten Drehkeil 15, der um das Schwenklager 30 unter Einwirkung der Drehkeilzugfeder 16 auf das Nachstelldruckstück 14 zugerichtet ist. Hierbei verrastet die Krümmung 34, während der Nachstellbewegung in der Rechtecköffnung 45 des Nachstelldruckstückes 14, bis der Endanschlag 35 nach Ausführung des maximalen Nachstellhubes am Nachstelldruckstück 14 an der Seitenfläche des Nachstelldruckstückes 14 anschlägt. Um die Nachstellbewegung des Nachstelldruckstückes 14 zu begünstigen, weist das Nachstelldruckstück 14 an seinen beiden Seitenflächen Auswölbungen 29 auf, die eine punktförmige, rost- und reibungsminimierte Kontaktfläche zum angrenzenden Stegsegment 13 und Bremsbackensteg 12 ermöglichen.

Die in Fig. 3 und 4 beschriebene zweite Nachstellvorrichtung, im wesentlichen bestehend aus Nachstelldruckstück 14, Drehkeil 15 und Drehkeilfeder 16 wirkt als Anlagenachstellung des Bremsbacken 5 an dem Abstützbock 2, um infolge der Spreiznachstellung der ersten Nachstellvorrichtung das zwischen dem auflaufseitigen Bremsbacken 5 und dem Abstützbock 2 entstehende Spiel ausgleichen zu können.

Die in Fig. 5 abschnittsweise gezeigte Ausführungsform der zweiten Nachstellvorrichtung am Bremsbacken 5 weist den drehfederbelasteten Exzenter 48 auf, der mit seiner verzahnten, als Kurvenbahn gestalteten Stirnfläche das gezahnte Ende des in Umfangsrichtung verschiebbaren Nachstelldruckstückes 14 berührt. Der Exzenter 48 ist auf dem Bolzen 49 zwischen Bremsbackensteg 12 und Stützsteg 51 drehbar gelagert, wobei die auf den Bolzen 49 aufgesteckte Drehfeder 50 mit dem einen Ende am Stützsteg 51 anliegt und mit dem anderen Ende die Federvorspannkraft auf den Exzenter 48 überträgt, so daß sich unter Wirkung der Zugfeder 32, gehalten am Abstützblock 2 und Nachstelldruckstück 14, das Nachstelldruckstück 14 gegen den Abstützbock 2 bewegt.

Fig. 6 zeigt eine weitere empfehlenswerte Ausführungsform derzweiten Nachstellvorrichtung, wonach in parallel in Blattzeichenebene hintereinander fluchtend angeordneten Längsöffnungen 66, 67 zwischen dem Bremsbackensteg 12 und Stüzsteg 51 das in Spreizrichtung der Bremsbacken 4, 5 verschiebbare Klemmstück 52 geführt ist, dessen bolzenförmiger Körper auf der Mantelfläche geräntelt ist, um einen guten Eingriff am Ende des Nachstelldruckstückes 14 zu bewerkstelligen. Beidseitig sind am Bolzen Zapfen 31, angebracht, die in den Längsöffnungen 66, 67 nahezu spielfrei geführt sind. Durch die Drehkeilzugfeder 16, die sowohl am Zapfen 31 wie auch in der Federaufnahme 68 eingehängt ist, drückt das Klemmstück 52 mit seinem Bolzen gegen das keilförmige Ende des Nachstelldruckstückes 14, so daß ein ständiger Kraftschluß am keilförmig auslaufenden Ende des Nachstelldruckstückes 14 zwecks Beibehaltung der jeweiligen Nachstellposition gewährleistet ist. Die Verschiebung des Nachstelldruckstückes 14 an dem Abstützbock 2 erfolgt durch die Zugfeder 32.

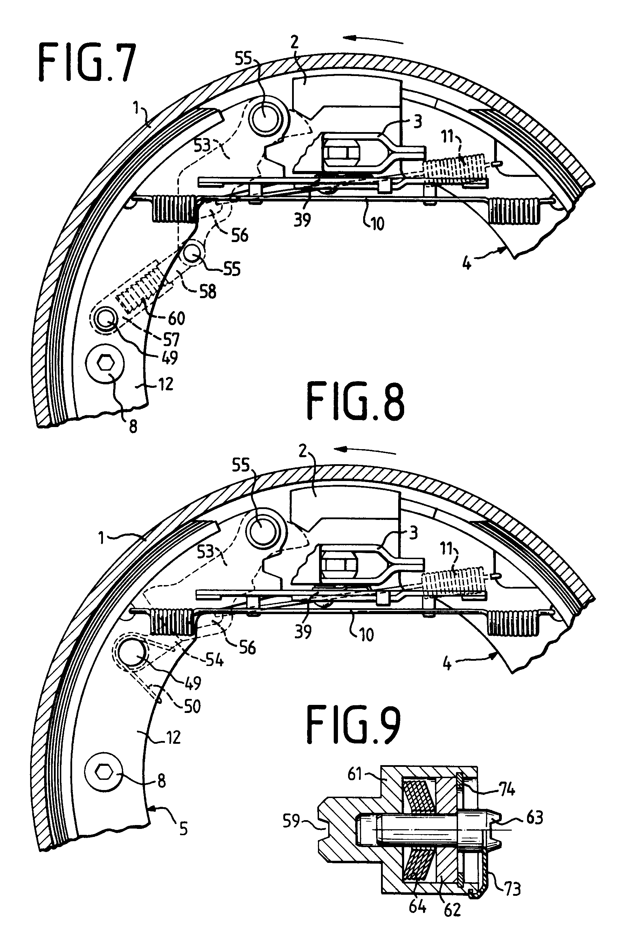

Ein weiteres Beispiel zur vorteilhaften Ausführung der zweiten Nachstellvorrichtung am Bremsbacken 5 zeigt die Fig. 7, wonach der drehbar am Bolzen 49 gelagerte Hülsenkörper 57, dessen im Hohlraum angeordnetes Sägezahngewinde 60 mit einem Gewindebolzen 58 zusammenwirkt und über einen Lagerbolzen 55 angelenkt wird, wodurch das Drehsegment 53 in seiner Position am Abstützbock 2 gehalten ist. Durch die Zugkraft der Nachstellungszugfeder 11 wird nach dem Aufspreizen der Bremsbacken 4, 5 das Drehsegment 53 bis zur Berührung des Abstützbockes 2 nachgestellt, wodurch entsprechend der Zähneteilung des Sägezahngewindes 60 die Nachstellvorrichtung in seiner neuen Position verbleibt. Zur Verschiebung und Arretierung des Gewindebolzens 58 ist der Hülsenkörper 57 in Bewegungsrichtung geschlitzt um eine Aufweitung des Hülsenkörpers 57 mit anschließendem Verasten des Gewindebolzen 58 zu ermöglichen.

Fig. 8 zeigt das Nachstellungsprinzip einer Klemmhebelsperre. Ein drehbar auf einem Bolzen 55 gelagertes Drehsegment 53 stützt sich an einem Klemmhebel 54 ab, dessen Hebelarm desachsiert zur Mittelachse des Bolzens 49 verläuft, wobei der Klemmhebel 54 durch die Drehfeder 50 am Bolzen 49 ständig im Eingriff mit dem Drehsegment 53 gehalten wird. Beim Ausschwenken in Nachstellrichtung des Drehsegmentes 53 wird die Kontaktfläche beider Teile entlastet und das Drehsegment 53 verschwenkt bis zur Anlage am Abstützbock 2. Beim Versuch einer Rückstellung des Drehsegmentes 53 verklemmt dieses mit dem Klemmhebel 54, infolge der Spannkraft der Drehfeder 50, wodurch eine feste arretierende Kraftüberbrückung gegeben ist. Die Kontaktfläche zwischen Drehsegment 53 und Klemmhebel 54 ist zur Verbesserung der Klemmwirkung geräntelt oder verzahnt.

Fig. 9 zeigt das Druckstück 6 als einseitig geöffneten Hohlkörper mit darin befindlicher, federbelasteter und axial verschiebbarer Druckscheibe 62, die den Druckbolzen 63 aufnimmt, so daß sich das eine Bremsbackenende nachgiebig am Druckbolzen 63 abstützt, während das andere Bremsbackenende an einer fest angeformten Aufnahme 59 an der geschlossenen Seite des Druckstückes anliegt. Hierbei ist die über die Druckscheibe 62 auf den Druckbolzen 63 wirkende Federkarft der gewählten Druckfeder 64 größer zu bemessen, als die vom Bremsbacken 5 auf das Druckstück 6 zu übertragende Bremsenbetätigungskraft. Andererseits muß die Federkraft der Druckfeder 64 kleiner bleiben als die Spannkraft der Bremstrommel, die zur plastischen Verformung führt, um einerseits Materialschäden zu verhindern und andererseits ein einwandfreies Lösen der Bremsbacken bei Wirkung der Schrumpfspannung infolge der Abkühlung der Bremstrommel 1 nach erfolgter Bremsung zu ermöglichen. Gegen Feuchteeinwirkung ist der Hohlraum des Gehäuses 61 mittels einer Schutzkappe 73 abgedichtet, die den Druckbolzen 63 und die Öffnung des Gehäuses 61 verschließt. Ein in einer Nut des Gehäuses 61 eingesetzter Sicherungsring 74 verhindert das unbeabsichtigte Herausschieben der Druckscheibe 62 aus der Gehäuseführung und hält die Druckscheibe 62 in ihrer vorgespannten Lage.

### Bezugszeichenliste:

- 1: Bremstrommel
- 2: Abstützbock
- 3: Spreizschloß
- 4: Bremsbacke
- 5: Bremsbacke
- 6: Druckstück
- 7: Zugfeder
- 8: Bremsbackenhalterung
- 9: Längsschlitz
- 10: Bremsbackenzugfeder
- 11: Nachstellungszugfeder
- 12: Bremsbackensteg
- 13: Stegsegment
- 14: Nachstelldruckstück
- 15: Drehkeil
- 16: Drehkeilzugfeder
- 17: Platte
- 18: Langloch
- 19: Platte
- 20: Ausschnitt
- 21: Führungsbolzen
- 22: Blattfeder
- 23: Querverzahnung
- 24: Stege
- 25: Führungsfahne
- 26: Führungselemente
- 27: Bremsträgerplatte
- 28: Einformung
- 29: Auswölbung
- 30: Schwenklager
- 31: Zapfen
- 32: Zugfeder
- 33: Aussparung
- 34: Krümmung
- 35: Endanschlag
- 36: Hebelstück
- 37: Setzkopf
- 38: Schließkopf
- 39: Druckstrebe
- 40: Ausschnitt
- 41: Ausschnitt
- 42: Ausnehmung
- 43: Ausnehmung
- 44: Bohrung
- 45: Öffnung
- 46: Öffnung
- 47: Öffnung
- 48: Exzenter
- 49: Bolzen
- 50: Drehfeder
- 51: Stützsteg
- 52: Klemmstück
- 53: Drehsegment
- 54: Klemmhebel
- 55: Lagerbolzen
- 56: Öffnung
- 57: Hülsenkörper
- 58: Gewindebolzen
- 59: Aufnahme
- 60: Sägezahngewinde
- 61: Gehäuse
- 62: Druckscheibe
- 63: Druckbolzen
- 64: Druckfeder
- 65: Belagträgerblechinnenseite
- 66: Längsöffnung
- 67: Längsöffnung
- 68: Federaufnahme
- 69: Betätigungshebel
- 70: Drucklasche
- 71: Zugseil
- 72: Gelenkbolzen
- 73: Schutzkappe
- 74: Sicherungsring

## Patentansprüche

1. Vorrichtung für eine Trommelbremse, insbesondere für mechanisch betätigbare, selbstverstärkende Innenbackentrommelbremsen für Kraftfahrzeuge, mit einem Paar an einem Druckstück einer Bremsträgerplatte angeordneten und mit Zugfedern versehenen Bremsbacken, mit einer mechanischen Betätigungsvorrichtung, die zwischen einem Paar einander gegenüberliegenden, durch eine Feder vorgespannten Bremsbackenenden wirksam ist, wobei die mechanische Betätigungsvorrichtung die Bremsbacken zum Bremsen an eine sie umschließende Bremstrommel anzupressen vermag und wobei die Trommelbremse an mindestens einem den Bremsbacken stützenden Bremsbackensteg eine zwischen den Bremsbackenenden angeordnete, spielausgleichende Nachstelleinrichtung vorsieht, dadurch **gekennzeichnet,** daß die Nachstelleinrichtung aus einer ersten Nachstellvorrichtung mit einer zwischen den Bremsbacken (4,5) angeordneten, mehrteiligen, selbstnachstellenden, längenveränderlichen Druckstrebe (39) besteht und das eine zweite Nachstellvorrichtung an einem den Bremsbacken (5) stützenden Bremsbackensteg (12) ein selbstnachstellendes Nachstellglied aufweist, das in Umfangsrichtung sowohl mit der mechanischen Betätigungseinrichtung (3) wie auch mit einem Abstützbock (2) zusammenwirkt.

2. Vorrichtung für eine Trommelbremse, insbesondere für mechanisch betätigbare, selbstverstärkende Innenbackentrommelbremsen für Kraftfahrzeuge nach Anspruch 1, dadurch **gekennzeichnet,** daß zwei parallel aufeinander angeordnete Platten (17, 19) die Druckstrebe (39) bilden, wobei das Grundprofil der Platten (17, 19) rechteckförmig gestaltet ist und an den Längsseiten des rechteckförmigen Grundprofils Führungselemente (26) ange-ordnet sind.

3. Vorrichtung für eine Trommelbremse nach Anspruch 1 oder 2, dadurch **gekennzeichnet,** daß die zwei parallel geführten Platten (17, 19) quer zur Verschieberichtung fluchtend übereinander angeordnet sind, wobei auf der Gleitfläche der ersten Platte (19) ein Führungsbolzen (21) befestigt ist, dessen Schaft in einem Langloch (18) der zweiten Platte (17) geführt ist.

4. Vorrichtung für eine Trommelbremse nach Anspruch 3, dadurch **gekennzeichnet,** daß der Führungsbolzen (21) vorzugsweise ein Nietstift ist, dessen Schaft im Langloch (18) der zweiten Platte (17) verschiebbar ist und von einem Schließ- und Setzkopf (38, 37) begrenzt ist, wobei zwischen Setzkopf (37) und erster Platte (19) eine Blattfeder (22) eingespannt ist, deren in Nachstellrichtung zur Platte (17) zeigendes und abgewinkeltes Ende durch einen Ausschnitt (20) der ersten Platte (19) in eine auf der Gleitfläche der zweiten Platte (17) angeordnete Querverzahnung (23) eingreift.

5. Vorrichtung für eine Trommelbremse nach Anspruch 4, dadurch **gekennzeichnet,** daß die Oberfläche der Querverzahnung (23) sägezahnartig ausgebildet ist, wobei das Sägezahnprofil mit der Zahnbrust unter einem vorzugsweise rechten Winkel in Nachstellrichtung sperrend wirkt, während der Zahnrücken entgegengesetzt zur Nachstellrichtung einen stumpfen Winkel zur Blattfeder (22) aufweist.

6. Vorrichtung für eine Trommelbremse nach einem der vorhergehenden Ansprüche, dadurch **gekennzeichnet,** daß die mehrteilige Druckstrebe (39) an ihren Endflächen hakenförmige Stege (24) aufweist, die in Ausschnitte (40, 41) der Bremsbacken (4,5) eingreifen, wobei die Länge der Ausschnitte (40, 41) größer ist, als die Breite der eingreifenden Stege (24).

7. Vorrichtung für eine Trommelbremse nach Anspruch 6, dadurch **gekennzeichnet,** daß in Ausnehmungen (42, 43) rechtwinklig abgekröpfte Führungsfahnen (25) vorgesehen sind, die parallel am Bremsbackensteg (13) abstützend zur Anlage kommen.

8. Vorrichtung für eine Trommelbremse nach einem der vorhergehenden Ansprüche, dadurch **gekennzeichnet,** daß die zweite Platte (17) der Druckstrebe (39) von den Führungselementen (26) der ersten Platte (19) umgriffen ist.

9. Vorrichtung für eine Trommelbremse nach einem der vorhergehenden Ansprüche, dadurch **gekennzeichnet,** daß die Führungselemente (26) U-förmig die zweite Platte (17) umgreifen.

10. Vorrichtung für eine Trommelbremse nach einem der vorhergehenden Ansprüche, dadurch **gekennzeichnet,** daß in der Blattfeder (22) Längsschlitze (9) vorgesehen sind.

11. Vorrichtung für eine Trommelbremse nach einem der vorhergehenden Ansprüche, dadurch **gekennzeichnet,** daß das Nachstellglied der zweiten Nachstellvorrichtung am Bremsbacken (5) aus einem exzentrisch zum Drehpunkt eines Schwenklagers (30), einer verzahnt verlaufenden Krümmung (34), einem Endanschlag (35) und einer der Form des Nachstelldruckstückes (14) angepaßten Aussparung (33) gebildeten Drehkeil (15) besteht, an dessen angrenzendes Hebelstück (36) eine Drehkeilzugfeder (16) mit einem Federende eingehängt ist, während das entgegengesetzte Federende in einer Federaufnahme (8) des Bremsbackensteges (12) eingreift.

12. Vorrichtung für eine Trommelbremse nach einem der vorhergenden Ansprüche, dadurch **gekennzeichnet,** daß der Drehkeil (15) unter Wirkung der Drehkeilzugfeder (16) mit seinem Schwenklager (30) in einem tangentialen Abstand zur Trommelbremsenmittelachse in einer Öffnung (47) im Bremsbackensteg (12) abgestützt ist und an der Aussparung (33) ein Nachstelldruckstück (14) berührt.

13. Vorrichtung für eine Trommelbremse nach Anspruch 12, dadurch **gekennzeichnet,** daß das Nachstelldruckstück (14) kleinflächige Auswölbungen (29) aufweist, die zwischen dem Bremsbackensteg (12) und einem Stegteil (13) das in Umfangsrichtung verschiebbare Nachstelldruckstück (14) führen.

14. Vorrichtung für eine Trommelbremse nach Anspruch 13, dadurch **gekennzeichnet,** daß in den Auswölbungen (29) Drehkörper, vorzugsweise Kugeln eingefügt sind, die von den angrenzenden Seitenflächen des Bremsbackensteges (12) und des Stegsegmentes (13) abrollend geführt sind.

15. Vorrichtung für eine Trommelbremse nach einem der vorhergehenden Ansprüche, dadurch **gekennzeichnet,** daß das Nachstelldruckstück (14) in radialer Richtung durch eine Belagträgerinnenseite (65) und aus radial entgegengesetzt angeordneten Einformungen (28) des aus Bremsbackensteg (12) und Stegsegment (13) gebildete Stegbleches geführt ist.

16. Vorrichtung für eine Trommelbremse nach einem der vorhergehenden Ansprüche, dadurch **gekennzeichnet,** daß der Drehkeil (15) durch Öffnungen (47, 46, 45) im Stegteil (13), im Bremsbackensteg (12) und Nachstelldrückstück (14) schwenkbar gelagert und in der Öffnung (45) des Nachstelldruckstückes (14) radial geführt ist.

17. Vorrichtung für eine Trommelbremse nach einem der vorhergenden Ansprüche, dadurch **gekennzeichnet,** daß das Stegsegment (13) und der Bremsbackensteg (12) ortsfest an ihrer radialen Außenberandung mit dem den Bremsbelag aufnehmenden Belagträgerblech (26) und an ihren Einformungen (28) vorzugsweise mittels Punktschweißung verbunden sind.

18. Vorrichtung für eine Trommelbremse nach einem der vorhergehenden Ansprüche, dadurch **gekennzeichnet,** daß das Nachstelldruckstück (14) mit seiner dem Abstützbock (2) zugewandten Fläche unter Eingriff einer in einer Bohrung des Druckstückes (14) eingehängten Zugkraft erzeugenden Nachstellfeder (11) den Anschlag des Abstützbockes (2) berührt.

19. Vorrichtung für eine Trommelbremse nach einem der vorhergehenden Ansprüche, dadurch **gekennzeichnet,** daß die Nachstellfeder (11) in paralleler Lage zur Bremsbackenzugfeder (10) angeordnet ist und diese in einer Federaufnahme des Bremsbackens (4) gemeinsam eingreifen, wobei die Bremsbackenzugfeder (10) die Führungsfahnen (25) der Druckstrebe (39) begrenzen.

20. Vorrichtung für eine Trommelbremse nach einem der vorhergehenden Ansprüche, dadurch **gekennzeichnet,** daß das Nachstellglied der zweiten Nachstellvorrichtung am Bremsbacken (5) aus einem drehfederbelasteten Exzenter (48) besteht, der mit seiner verzahnten, vorzugsweise mit logarithmischer Kurvenbahn gestalteten Stirnfläche das gezahnte Ende des in Umfangsrichtung verschiebbaren Nachstelldruckstückes (14) berührt.

21. Vorrichtung für eine Trommelbremse nach einem der vorhergehenden Ansprüche, dadurch **gekennzeichnet,** daß mindestens eine um einen Bolzen (49) gewickelte Drehfeder (50), deren erstes Ende am einem Stützsteg (51) und deren zweites Ende am Exzenter (48) abgestützt ist, den Exzenter (48) in Richtung des Nachstelldruckstückes (14) verdreht, und daß unter Kraftschluß eine am Abstützbock (2) und Nachstelldruckstück (14) angeordnete Zugfeder (32) das in Umfangsrichtung verschiebbare Nachstelldruckstück (14) am Abstützbock (2) zur Kontaktierung bringt.

22. Vorrichtung für eine Trommelbremse nach einem der vorhergehenden Ansprüche, dadurch **gekennzeichnet,** daß der Bolzen (49) den Exzenter (48) drehbar gelagert aufnimmt und zwischen dem Bremsbackensteg (12) und einem Stützsteg (51) ortsfest angeordnet ist.

23. Vorrichtung für eine Trommelbremse nach einem der vorhergehenden Ansprüche, dadurch **gekennzeichnet,** daß die Federvorspannkraft der Bremsbackenzugfeder (10) größer ist als die der Nachstellungszugfeder (11).

24. Vorrichtung für eine Trommelbremse nach einem der vorhergehenden Ansprüche, dadurch **gekennzeichnet,** daß in Längsöffnungen (66, 67) zwischen dem Bremsbackensteg (12) und dem Stützsteg (51) ein in Spreizrichtung der Bremsbacken (4, 5) in den Längsöffnungen (66, 67) verschiebbares Klemmstück (52) geführt ist, dessen bolzenförmig gestalteter Körper auf der Mantelfläche eine Rändelung aufweist, die mit dem einen Ende des Druckstückes (14) zusammenwirkt.

25. Vorrichtung für eine Trommelbremse nach einem der vorhergehenden Ansprüche, dadurch **gekennzeichnet,** daß das verschiebbare Klemmstück (52) in Nachstellrichtung als keilförmige Platte ausgeführt ist und mittels beidseitig angebrachten Zapfen (31) in den Längsöffnungen (66, 67) geführt ist.

26. Vorrichtung für eine Trommelbremse nach einem der vorhergehenden Ansprüche, dadurch **gekennzeichnet,** daß das in Längsrichtung verschiebbare Klemmstück (52) durch die Wirkung einer Feder (16) kraftschlüssig gegen die in Spreizrichtung der Bremsbacken (5) keilförmig verjüngten Berandung des Nachstelldruckstückes (14) wirkt.

27. Vorrichtung für eine Trommelbremse nach einem der vorhergehenden Ansprüche, dadurch **gekennzeichnet,** daß das Nachstellglied der zweiten Nachstellvorrichtung am Bremsbacken (5) einem mittels Drehfeder (50) belasteten, exzentrisch am Bremsbackensteg (12) mittels Bolzen (49) gelagerten Klemmhebel (54) aufweist, wobei die Endfläche des Klemmhebels (54) vorzugsweise verzahnt ist und den Anschlag eines Drehsegmentes (53) berührt, der exzentrisch drehbar auf einem ortsfesten, senkrecht auf dem Bremsbackensteg (12) angeordneten Lagerbolzen (55) mit in einer Öffnung (56) aufnehmenden Nachstellungszugfeder (11) versehen ist.

28. Vorrichtung für eine Trommelbremse nach einem der vorhergehenden Ansprüche, dadurch **gekennzeichnet,** daß unter einer verkürzenden Wirkung der Nachstellungszugfeder (11) das Drehsegment (53) den Abstützbock (2) kontaktiert.

29. Vorrichtung für eine Trommelbremse nach einem der vorhergehenden Ansprüche, dadurch **gekennzeichnet,** daß das Nachstellglied der zweiten Nachstellvorrichtung am Bremsbacken (5) einen am Bremsbackensteg (12) drehbar gelagerten, mit mindestens einem Längsschlitz versehenen Hülsenkörper (57) aufweist, dessen im Hohlraum angeordnetes Sägezahngewinde (60) mit einem Gewindebolzen (58) zusammenwirkt, welcher gelenkig verbindbar am Drehsegment (53) befestigt ist.

30. Vorrichtung für eine Trommelbremse nach einem der vorhergehenden Ansprüche, dadurch **gekennzeichnet,** daß die Vorrichtung eine Einstelleinheit, bestehend aus einem Druckstück (6) in einem Gehäuse (61) mit einem in einer Druckscheibe (62) verschiebbar geführten Druckbolzen (63) aufweist, wobei zwischen der Druckscheibe (62) und einer gegenüberliegenden Wand im Hohlraum des Gehäuses (61) eine Druckfeder (64) eingesetzt ist.

## Claims

1. An apparatus for a drum brake, in particular for mechanically actuatable self-energizing internal-shoe-type drum brakes for automotive vehicles, with a pair of brake shoes arranged on a brake carrier plate at a thrust member and furnished with tension springs, a mechanical actuating apparatus acting between a pair of brake shoe ends being disposed opposite each other and being prestressed by springs, said mechanical actuating apparatus being capable of pressing the brake shoes for braking against a brake drum enclosing them and the drum brake comprising a clearance compensating adjusting device arranged between the brake shoe ends at at least one brake shoe web supporting the brake shoes,
**characterized** in that the adjusting apparatus consists of a first adjusting apparatus with a multiple-part, self-adjusting, variable-length pressure strut (39) being arranged between the brake shoes (4, 5), and in that a second adjusting apparatus is furnished at a brake shoe web (12) supporting the brake shoe (5) with a self-adjusting adjustment member which interacts in the circumferential direction both with the mechanical actuating device (3) and with a supporting bracket (2).

2. An apparatus for a drum brake, in particular for mechanically actuatable self-energizing internal shoe-type drum brakes for automotive vehicles as claimed in claim 1,
**characterized** in that two plates (17, 19) which are arranged parallel one on top of the other form the said pressure strut (39), the basic profile of the said plates (17, 19) having a rectangular shape and guide elements (26) being arranged at the longitudinal sides of the rectangular basic profile.

3. An apparatus for a drum brake as claimed in claim 1 or in claim 2,
**characterized** in that the two plates (17, 19) guided in parallel are arranged flush one on top of the other transversely in respect of the sliding direction, a guide pin (21) being secured on the sliding surface of the first plate (19) whose stem is guided in an oblong hole (18) of the second plate (17).

4. An apparatus for a drum brake as claimed in claim 3,
**characterized** in that the guide pin (21) preferably is a rivet pin whose stem is slidable in the oblong hole (18) of the second plate (17) and is bounded by a closing head (38) and a swagehead (37), a leaf spring (22) being clamped between the swage-head (37) and the first plate (19) whose end being bent off and pointing toward the plate (17) in the direction of adjustment engages a transverse toothing (23) arranged on the sliding surface of the second plate (17) through a cutout (20) of the first plate (19).

5. An apparatus for a drum brake as claimed in claim 4, **characterized** in that the surface of the said transverse toothing (23) has a saw tooth-shaped configuration, the saw tooth profile with the tooth face having a blocking effect preferably at a right angle in the direction of adjustment, while the tooth back opposed to the direction of adjustment forms an obtuse angle with the said leaf spring (22).

6. An apparatus for a drum brake as claimed in anyone of the preceding claims, **characterized** in that the said multiple-part pressure strut (39) is furnished at its end surfaces with hook-shaped webs (24) which engage cutouts (40, 41) of the said brake shoes (4, 5), the length of the said cutouts (40, 41) being larger than the width of the said engaging webs (24).

7. An apparatus for a drum brake as claimed in claim 6, **characterized** in that in recesses (42, 43) guide tongues (25) bent off at a right angle are provided which supportingly come in abutment in parallel against the said brake shoe web (13).

8. An apparatus for a drum brake as claimed in anyone of the preceding claims, **characterized** in that the said second plate (17) of the said pressure strut (39) is ensclosed by the said guide elements (26) of the said first plate (19).

9. An apparatus for a drum brake as claimed in anyone of the preceding claims, **characterized** in that the said guide elements (26) enclose the said second plate (17) in a U-shaped manner.

10. An apparatus for a drum brake as claimed in anyone of the preceding claims, **characterized** in that longitudinal slots (9) are provided in the said leaf spring (22).

11. An apparatus for a drum brake as claimed in anyone of the preceding claims, **characterized** in that the adjusting member of the said second adjusting apparatus at the brake shoe (5) is represented by a rotating key (15) being arranged eccentrically in respect of the fulcrum of a swivel bearing (30), having a toothed curvature (34), a limit stop (35) and a sparing (33) adapted to the shape of the adjusting thrust member (14) and at whose adjacent lever section (36) a rotating key tension spring (16) is suspended with one spring end, while the opposite spring end engages a spring accommodating means (8) of the said brake shoe web (12).

12. An apparatus for a drum brake as claimed in anyone of the preceding claims, **characterized** in that under the action of the said rotating key tension spring (16) the said rotating key (15) is supported with its said swivel bearing (30) at a tangential distance from the centre line of the drum brake in an opening (47) in the said brake shoe web (12) and touches a said adjusting thrust member (14) at the said sparing (33).

13. An apparatus for a drum brake as claimed in claim 12, **characterized** in that the said adjusting thrust member (14) is formed with small-area bulges (29) which guide between the said brake shoe web (12) and a web section (13) the said adjusting thrust member (14) being slidable in circumferential direction.

14. An apparatus for a drum brake as claimed in claim 13, **characterized** in that in the said bulges (29) rolling bodies, preferably balls are inserted which are guided in their rolling motion by the juxtaposed lateral surfaces of the said brake shoe web (12) and the said web segment (13).

15. An apparatus for a drum brake as claimed in anyone of the preceding claims, **characterized** in that the said adjusting thrust member (14) is guided in radial direction by an inner side (65) of the lining carrier and by radially opposed dimples (28) of the web steel plate or steel sheet constituted by the said brake shoe web (12) and the said web segment (13).

16. An apparatus for a drum brake as claimed in anyone of the preceding claims, **characterized** in that the said rotating key (15) is swivelably secured by openings (47, 46, 45) in the said web section (13), in the said brake shoe web (12) and in the said adjusting thrust member (14) and is radially guided in the said opening (45) of the said adjusting thrust member (14).

17. An apparatus for a drum brake as claimed in anyone of the preceding claims, **characterized** in that the said web segment (13) and the said brake shoe web (12) are stationarily coupled at their radially external margin to the lining carrier plate (26) which bears at the brake lining and at their dimples (28) preferably by means of spot welding.

18. An apparatus for a drum brake as claimed in anyone of the preceding claims,
**characterized** in that, under the action of an adjusting spring (11) suspended in a bore of the thrust member (14) and generating tensile force, the adjusting thrust member (14) touches the stop of the supporting bracket (2) with its surface facing the supporting bracket (2).

19. An apparatus for a drum brake as claimed in anyone of the preceding claims,
**characterized** in that the adjusting spring (11) is arranged in parallel position in respect of the brake shoe tension spring (10), and in that they jointly engage a spring accommodating means of the brake shoe (4), the brake shoe tension spring (10) bounding the guide tongues (25) of the pressure strut (39).

20. An apparatus for a drum brake as claimed in anyone of the preceding claims,
**characterized** in that the adjusting member of the second adjusting apparatus at the brake shoe (5) is constituted by a torsion spring-loaded eccentric (48) which touches with its toothed front face being preferably configurated with logarithmic curvature the toothed end of the adjusting thrust member (14) being slidable in circumferential direction.

21. An apparatus for a drum brake as claimed in anyone of the preceding claims,
**characterized** in that at least one torsion spring (50) wound around a pin (49) and whose first end is supported at a supporting web (51) and whose second end is supported at the eccentric (48) swings the eccentric (48) in the direction of the adjusting thrust member (14), and in that under the effect of a friction-type locking a tension spring (32) disposed at the supporting bracket (2) and at the adjusting thrust member (14) brings the adjusting thrust member (14) which is slidable in circumferential direction in contact with the supporting bracket (2).

22. An apparatus for a drum brake as claimed in anyone of the preceding claims,
**characterized** in that the pin (49) receives the eccentric (48) in the shape of a pivot bearing, and in that it is stationarily arranged between the brake shoe web (12) and a supporting web (51).

23. An apparatus for a drum brake as claimed in anyone of the preceding claims,
**characterized** in that the spring prestressing force of the brake shoe tension spring (10) is higher than that of the adjusting tension spring (11).

24. An apparatus for a drum brake as claimed in anyone of the preceding claims,
**characterized** in that in longitudinal openings (66, 67) between the brake shoe web (12) and the supporting web (51) a clamping element (52) is guided which is slidable in the longitudinal openings (66, 67) in the direction of expansion of the brake shoes (4, 5) and whose bolt-shaped body is knurled on the surface area, said knurling interacting with the one end of the thrust member (14).

25. An apparatus for a drum brake as claimed in anyone of the preceding claims,
**characterized** in that the slidable clamping element (52) is configurated as a plate wedge-shaped in the direction of adjustment and is guided in the longitudinal openings (66, 67) by means of studs (31) arranged on either side.

26. An apparatus for a drum brake as claimed in anyone of the preceding claims,
**characterized** in that the clamping element (52) being slidable in longitudinal direction acts in a friction-type locking and due to the effect of a spring (16) against the margin of the adjusting thrust member (14), which margin presents a wedge-shaped taper in the direction of expansion of the said brake shoes (5).

27. An apparatus for a drum brake as claimed in anyone of the preceding claims,
**characterized** in that the adjusting member of the second adjusting apparatus at the brake shoe (5) is furnished with a clamping lever (54) loaded by means of a torsion spring (50) and eccentrically secured to the brake shoe web (12) by means of a pin (49), the end surface of the clamping lever (54) preferably being toothed and touching the stop of a rotating segment (53) being eccentrically rotatable on a stationary bearing bolt (55) which is vertically secured on the brake shoe web (12) and provided with an adjusting tension spring (11) secured in an opening (56) of the rotating segment (53).

28. An apparatus for a drum brake as claimed in anyone of the preceding claims,
**characterized** in that under a shortening action of the adjusting tension spring (11), the said rotating segment (53) contacts the supporting bracket (2).

29. An apparatus for a drum brake as claimed in anyone of the preceding claims,
**characterized** in that the adjusting member of the second adjusting apparatus at the brake shoe (5) is furnished with a bushing element (57) which is privoted on the brake shoe web (12) and presents at least one longitudinal slot and whose buttress thread (60) arranged within the hollow space interacts with a threaded bolt (58) being pivotably secured to the rotating segment (53).

30. An apparatus for a drum brake as claimed in anyone of the preceding claims,
**characterized** in that the said apparatus is comprised of an adjusting unit consisting of a thrust member (6) in a housing (61) with a thrust pin (63) being slidably guided in a pressure disc (62), a compression spring (64) being inserted between the pressure disc (62) and an opposite wall in the hollow space of the housing (61).

## Revendications

1. Dispositif pour frein à tambour, notamment pour frein à tambour à mâchoires intérieures à actionnement mécanique et à autoserrage pour véhicule automobile, comprenant deux mâchoires de frein, disposées sur une pièce de compression d'un plateau porte-frein et pourvues de ressorts de traction, et un dispositif d'actionnement mécanique qui agit entre deux extrémités de mâchoire de frein se faisant face et soumises à une précontrainte par un ressort, le dispositif d'actionnement mécanique pouvant appliquer les mâchoires de frein, en vue du freinage, sur un tambour de frein les entourant et le frein à tambour comportant, sur au moins une âme de mâchoire de frein servant de support à une mâchoire de frein, un mécanisme de rattrapage de jeu disposé entre les extrémités des mâchoires de frein et servant à compenser les jeux, caractérisé en ce que le mécanisme de rattrapage de jeu comprend un premier dispositif de rattrapage de jeu comportant une entretoise de compression (39) à autorattrapage de jeu, en plusieurs parties et à longueur variable, qui est disposée entre les mâchoires de frein (4, 5) et en ce qu'un second dispositif de rattrapage de jeu, monté sur une âme de mâchoire de frein (12) portant la mâchoire de frein (5), comprend un organe de rattrapage de jeu, à rattrapage automatique, qui coopère selon la direction circonférentielle avec le dispositif d'actionnement mécanique (3) ainsi qu'avec un support-entretoise (2).

2. Dispositif pour frein à tambour, notamment pour frein à tambour à mâchoires intérieures à actionnement mécanique et à autoserrage pour véhicule automobile, suivant la revendication 1 , caractérisé en ce que deux plaques (17, 19) disposées parallèlement l'une à l'autre constituent l'entretoise de compression (39), le profil de base des plaques (17, 19) étant de forme rectangulaire et des éléments de guidage (26) étant disposés sur les côtés longitudinaux de ce profil de base de forme rectangulaire.

3. Dispositif pour frein à tambour suivant la revendication 1 ou 2, caractérisé en ce que les deux plaques (17, 19) guidées parallèlement sont disposées, l'une au-dessus de l'autre et dans l'alignement l'une de l'autre, transversalement à la direction de déplacement, tandis qu'à la surface de glissement de la première plaque (19), il est fixé un téton de guidage (21) dont l'axe est guidé dans un trou allongé (18) de la seconde plaque (17).

4. Dispositif pour frein à tambour suivant la revendication 3, caractérisé en ce que le téton de guidage (21) est de préférence un rivet dont la tige peut se déplacer dans le trou longitudinal (18) de la seconde plaque (17) et est limitée par une tête de fermeture (38) et une tête de pose (37), tandis qu'un ressort à lame (22) est mis sous tension entre la tête de pose (37) et la première plaque (19) et que l'extrémité de ce ressort à lame (22), coudée, qui est dirigée dans la direction de rattrapage de jeu vers la plaque (17), traverse une découpe (20) de la première plaque (19) pour venir s'engager dans une denture transversale (23) disposée sur la surface de glissement de la seconde plaque (17).

5. Dispositif pour frein à tambour suivant la revendication 4, caractérisé en ce que la surface de la denture transversale (23) est réalisée en dents de scie, le profil en dents de scie agissant par sa face d'attaque, qui est de préférence disposée sous un angle droit, en réalisant un blocage dans la direction de rattrapage de jeu, tandis que, dans le sens opposé à la direction de rattrapage de jeu, la face arrière des dents fait un angle obtus vis-à-vis du ressort à lame (22).

6. Dispositif pour frein à tambour suivant l'une des revendications précédentes, caractérisé en ce qu a ses surfaces extrêmes, l'entretoise de compression (39) en plusieurs parties comporte des branches (24) en forme de crochet qui s'emboîtent dans des découpes (40, 41) des mâchoires de frein (4, 5), la longueur des découpes (40, 41) étant supérieure à la largeur des branches (24) s'y emboîtant.

7. Dispositif pour frein à tambour suivant la revendication 6, caractérisé en ce que, dans des évidements (42, 43), il est prévu des pattes de guidage (25) repliées perpendiculairement qui viennent parallèlement en appui contre l'âme de mâchoire de frein (13) de façon à assurer un soutien.

8. Dispositif pour frein à tambour suivant l'une des revendications précédentes, caractérisé en ce que la seconde plaque (17) de l'entretoise de compression (39) est entourée par les éléments de guidage (26) de la première plaque (19).

9. Dispositif pour frein à tambour suivant l'une des revendications précédentes, caractérisé en ce que les éléments de guidage (26) entourent en forme de U la seconde plaque (17).

10. Dispositif pour frein à tambour suivant l'une des revendications précédentes, caractérisé en ce que des fentes longitudinales (9) sont prévues dans le ressort à lame (22).

11. Dispositif pour frein à tambour suivant l'une des revendications précédentes, caractérisé en ce que l'organe de rattrapage de jeu du second dispositif de rattrapage de jeu disposé sur la mâchoire de frein (5) est constitué d'une cale pivotante (15) qui est disposée d'une manière excentrée vis-à-vis du centre de rotation d'un appui basculant (30) et est formée d'une partie courbe (34) s'étendant d'une manière dentée, d'une butée extrême (35) et d'une entaille (33) adaptée à la forme de la pièce de compression de rattrapage de jeu (14), un ressort de traction de cale pivotante (16) étant accroché, par une première extrémité, sur la partie de levier voisine (36) de la cale pivotante (15), tandis que l'extrémité opposée de ce ressort est engagée dans un appui de ressort (8) de l'âme de mâchoire de frein (12).

12. Dispositif pour frein à tambour suivant l'une des revendications précédentes, caractérisé en ce que, sous l'action du ressort de traction de cale pivotante (16), la cale pivotante (15) prend appui contre son appui de basculement (30), situé suivant un espacement tangentiel vis-à-vis de l'axe central du frein à tambour, et dans une ouverture (47) ménagée dans l'âme de mâchoire de frein (12) et en ce qu'une pièce de compression de rattrapage de jeu (14) prend appui contre l'entaille (33).

13. Dispositif pour frein à tambour suivant la revendication 12, caractérisé en ce que la pièce de compression de rattrapage de jeu (14) comporte des parties bombées (29) de faible surface qui guident cette pièce de compression (14), de façon qu'elle puisse se déplacer selon la direction circonférentielle, entre l'âme de mâchoire de frein (12) et un segment d'âme (13).

14. Dispositif pour frein à tambour suivant la revendication 13, caractérisé en ce que, dans les parties bombées (29), il est inséré des corps roulants, de préférence des billes, qui sont guidés, de façon à pouvoir rouler, entre les surfaces latérales adjacentes de l'âme de mâchoire de frein (12) et du segment d'âme (13).

15. Dispositif pour frein à tambour suivant l'une des revendications précédentes, caractérisé en ce que, dans la direction radiale, la pièce de compression de rattrapage de jeu (14) est guidée par une face intérieure (65) du porte-garniture et par des parties conformées (28) de la tôle d'âme, formée de l'âme de mâchoire de frein (12) et du segment d'âme (13), qui se font face dans le sens radial.

16. Dispositif pour frein à tambour suivant l'une des revendications précédentes, caractérisé en ce que la cale pivotante (15) est montée basculante à travers les ouvertures (47, 46, 45), ménagées dans le segment d'âme (13), dans l'âme de mâchoire de frein (12) et dans la pièce de compression de rattrapage de jeu (14) et en ce qu'elle est guidée radialement dans l'ouverture (45) de cette pièce de compression (14).

17. Dispositif pour frein à tambour suivant l'une des revendications précédentes, caractérisé en ce que le segment d'âme (13) et l'âme de mâchoire de frein (12) sont réunis de manière fixe, à l'endroit de leurs bords radialement extérieurs, à la tôle porte-garniture (26) recevant la garniture de frein, et à l'endroit de leurs parties conformées (28), de préférence à l'aide de soudures par points.

18. Dispositif pour frein à tambour suivant l'une des revendications précédentes, caractérisé en ce que, par sa surface tournée vers le support-entretoise (2) et sous l'action d'un ressort de rattrapage de jeu (11) produisant une force de traction et accroché dans un trou de la pièce de compression (14), cette pièce de compression (14) repose en appui contre le support-entretoise (2).

19. Dispositif pour frein à tambour suivant l'une des revendications précédentes, caractérisé en ce que le ressort de rattrapage de jeu (11) est disposé suivant une position parallèle au ressort de traction de mâchoires de frein (10) et en ce que ces ressorts sont accrochés ensemble dans un appui de ressort de la mâchoire de frein (4), le ressort de traction de mâchoires de frein (10) retenant les pattes de guidage (25) de l'entretoise de compression (39).

20. Dispositif pour frein à tambour suivant l'une des revendications précédentes, caractérisé en ce que l'organe de rattrapage de jeu du second dispositif de rattrapage de jeu disposé sur la mâchoire de frein (5) est constitué d'un excentrique (48) qui est soumis à la sollicitation d'un ressort de torsion et qui, par sa surface frontale dentée, de préférence réalisée sous la forme d'une surface de came logarithmique, prend appui contre l'extrémité dentée de la pièce de compression de rattrapage de jeu (14) agencée de façon à pouvoir se déplacer selon la direction circonférentielle.

21. Dispositif pour frein à tambour suivant l'une des revendications précédentes, caractérisé en ce qu'au moins un ressort de torsion (50), qui est enroulé autour d'un axe (49) et dont une première extrémité prend appui contre un segment d'âme (51) et la seconde extrémité contre l'excentrique (48), fait tourner cet excentrique (48) en direction de la pièce de compression de rattrapage de jeu (14) et en ce qu'en appliquant une force, un ressort de traction (32), monté sur le supportentretoise (2) et sur la pièce de compression de rattrapage de jeu (14), amène cette pièce de compression (14), qui est agencée de façon à pouvoir se déplacer suivant la direction circonférentielle, en contact avec le support-entretoise (2).

22. Dispositif pour frein à tambour suivant l'une des revendications précédentes, caractérisé en ce que l'axe (49) reçoit l'excentrique (48) suivant un montage rotatif et est monté d'une manière fixe entre l'âme de mâchoire de frein (12) et un segment d'âme (51).

23. Dispositif pour frein à tambour suivant l'une des revendications précédentes, caractérisé en ce que la force de précontrainte élastique fournie par le ressort de traction de mâchoires de frein (10) est supérieure à celle du ressort de traction de rattrapage de jeu (11).

24. Dispositif pour frein à tambour suivant l'une des revendications précédentes, caractérisé en ce qu'une pièce de coincement (52), agencée de façon à pouvoir se déplacer suivant la direction d'expansion des mâchoires de frein (4, 5) dans des ouvertures allongées (66, 67), est guidée dans ces ouvertures allongées (66, 67) entre l'âme de mâchoire de frein (12) et le segment d'âme (51) et en ce que le corps en forme de goujon de cette pièce de coincement (52) comporte sur sa surface cylindrique un moletage qui coopère avec l'une des extrémités de la pièce de compression (14).

25. Dispositif pour frein à tambour suivant l'une des revendications précédentes, caractérisé en ce que la pièce de coincement (52) déplaçable est réalisée sous la forme d'une plaque en forme de coin disposée selon la direction de rattrapage de jeu et est guidée dans les ouvertures longitudinales (66, 67) à l'aide de tétons (31) disposés à ses deux extrémités.

26. Dispositif pour frein à tambour suivant l'une des revendications précédentes, caractérisé en ce que, sous l'action d'un ressort (16) et par l'effet d'application d'une force, la pièce de coincement (52), agencée de façon à pouvoir se déplacer selon la direction longitudinale, agit contre le bord de la pièce de compression de rattrapage de jeu (14) qui converge en forme de coin selon la direction d'expansion des mâchoires de frein (5).

27. Dispositif pour frein à tambour suivant l'une des revendications précédentes, caractérisé en ce que l'organe de rattrapage de jeu du second dispositif de rattrapage de jeu disposé sur la mâchoire de frein (5) comprend un lever de coincement (54) soumis à la sollicitation d'un ressort de torsion (50) et monté d'une manière excentrique sur l'âme de mâchoire de frein (12) à l'aide d'un axe (49), la surface extrême de ce lever de coincement (54) étant de préférence dentée et prenant appui contre la butée d'un segment pivotant (53) qui est monté rotatif d'une manière excentrée sur un axe de palier (55) disposé d'une manière fixe perpendiculairement à l'âme de mâchoire de frein (12) et qui est pourvu d'un ressort de traction de rattrapage de jeu (11) s'accrochant dans une ouverture (56).

28. Dispositif pour frein à tambour suivant l'une des revendications précédentes, caractérisé en ce que, sous l'action du ressort de traction de rattrapage de jeu (11) agissant dans le sens d'un raccourcissement, le segment pivotant (53) vient au contact du support-entretoise (2).

29. Dispositif pour frein à tambour suivant l'une des revendications précédentes, caractérisé en ce que l'organe de rattrapage de jeu du second dispositif de rattrapage de jeu disposé sur la mâchoire de frein (5) comprend un corps de douille (57) qui est monté pivotant sur l'âme de mâchoire de frein (12) et est pourvu d'au moins une fente longitudinale et dont la cavité intérieure comporte un filetage en dents de scie (60) qui coopère avec une tige filetée (58) qui est fixée de façon à pouvoir être reliée de manière articulée au segment pivotant (53).

30. Dispositif pour frein à tambour suivant l'une des revendications précédentes, caractérisé en ce que le dispositif comprend une unité de réglage, constituée d'une pièce de compression (6) disposée dans un boîtier (61) comportant un téton de compression (63) guidé de manière mobile par un disque de compression (62), un ressort de compression (64) étant disposé entre le disque de compression (62) et une paroi opposée de la cavité intérieure du boîtier (61).
